# EUROPÄISCHE PATENTSCHRIFT

(11) **EP 2 816 884 B1**
(45) Veröffentlichungstag und Bekanntmachung des Hinweises auf die Patenterteilung: **06.04.2016**
(21) Anmeldenummer: 13704936.7
(22) Anmeldetag: 15.02.2013
(51) Int. Cl.: A01C 15/00, A01C 7/20, B60P 1/42

(54) **SAEMASCHINE**
SEEDER
SEMOIR

(30) Priorität: 20.02.2012 DE 102012101333
(43) Veröffentlichungstag der Anmeldung: 31.12.2014
(73) Patentinhaber: Amazonen-Werke H. Dreyer GmbH & Co. KG, 49205 Hasbergen (DE)
(72) Erfinder: SCHWAMM, Victor, 49086 Osnabrück (DE); VOLLMER, Hubert, 49584 Fürstenau (DE)
(86) Internationale Anmeldenummer: PCT/EP2013/053046
(87) Internationale Veröffentlichungsnummer: WO 2013/124216

(56) Entgegenhaltungen:
- DE-A1- 4 137 955
- DE-A1-102009 024 725
- DE-A1-102009 026 335
- GB-A- 2 349 133
- US-A1- 2005 238 469

## Beschreibung

Die Erfindung betrifft eine Sämaschine gemäß des Oberbegriffes des Patentanspruches 1.

Eine derartige Sämaschine ist in der DE 10 2009 024 725 A1 beschrieben. Diese Sämaschine weist einen Zentralrahmen auf. Auf der Vorderseite des Zentralrahmens ist eine an die Zugvorrichtung eines Ackerschlepper Zugdeichsel angeordnet. Auf der Rückseite des Zentralrahmens sind zwei beabstandet zueinander angeordnete Laufräder angeordnet. Oberhalb der Laufräder ist eine nicht mittelpunktsymmetrische Vorratsbehältereinheit mit mehreren voneinander getrennten Vorratsbehälterbereichen hinter den Säscharen in einen Zentralrahmen angeordnet. An dem Zentralrahmen ist weiterhin ein Säschar tragender Mittelrahmen angeordnet. An diesem Mittelrahmen sind beidseitig mittels Gelenken miteinander verbundene und um in Fahrtrichtung verlaufende Schwenkachsen zueinander verschwenkbare Seitenrahmen angeordnet. An den Seitenrahmen sind ebenfalls Säschare in Fahrtrichtung zueinander versetzt und auf Lücke zueinander angeordnet. Jedem Vorratsbehälterbereich ist ein Dosierorgan zugeordnet. Das jeweilige Dosierorgan speist das sich in den jeweiligen Vorratsbehälterbereich befindliche Material über Schleusen in zu Säscharen führenden und mit jeweils einem Förderluftstrom beaufschlagte Förderleitungen in einstellbaren Mengen ein.

Das Aufnahmevolumen der Vorratsbehälterbereiche der der Sämaschine großer Arbeitsweise zugeordneten Vorratsbehältereinheit ist relativ klein, so dass sehr häufig nach nur geringer Flächenleistung Material nachgefüllt werden muss.

Weiterhin ist der Sämaschine eine als Förderschnecke ausgebildete Befülleinrichtung zugeordnet. Über diese Förderschnecke lassen sich die einzelnen Vorratsbehälterbereiche mit dem auszubringenden Material befüllen.

Der Erfindung liegt die Aufgabe zu Grunde, eine vorteilhafte Befüllung der einzelnen Vorratsbehälterbereiche von hintereinander angeordneten Vorratsbehältereinheiten zu erreichen.

Diese Aufgabe der Erfindung gemäß dadurch gelöst, dass den, mehrere jeweils in und quer zur Fahrtrichtung beabstandet zueinander angeordnete Einfüllöffnungen aufweisenden, Vorratsbehältereinheiten eine als Förderschnecke ausgebildete Befülleinrichtung mit einem verschwenkbaren Auslaufrüssel zugeordnet ist, dass der Auslaufrüssel einerseits zwischen zwei Endpositionen in und entgegen der Fahrtrichtung und andererseits zwischen zwei Endpositionen quer zur Fahrtrichtung verschwenkbar angeordnet ist.

Infolge dieser Maßnahmen lassen sich eine Vielzahl von Vorratsbehälterbereichen, deren Einfüllöffnungen beabstandet zueinander angeordnet sind, in einfacher Weise befüllen.

Um mittels der Förderschnecke die einzelnen Vorratsbehälterbereiche zum Befüllen einfacher Weise erreichen zu können, ist vorgesehen, dass dem Auslaufrüssel ein erstes motorisches Stellelement für die Verschwenkung des Auslaufrüssels quer zur Fahrtrichtung und ein weiteres motorisches Stellelement für die Verschwenkung des Auslaufrüssels in und entgegen der Fahrtrichtung zugeordnet ist.

Eine einfache Ausgestaltung des Auslaufrüssels lässt sich dadurch gewährleisten, dass der Auslaufrüssel ein erstes Auslaufrüsselteil und ein daran schwenkbar befestigtes weiteres Auslaufrüsselteil aufweist, dass das erste Auslaufrüsselteil um die Längsachse der Förderschnecke verschwenkbar angeordnet ist, dass das zweite Auslaufrüsselteil an dem ersten Auslaufrüsselteil um eine quer zur Längsachse der Förderschnecke verlaufende Schwenkachse verschwenkbar angeordnet ist.

Um in einfacher Weise den Auslaufrüssel motorisch verstellen zu können, ist vorgesehen, dass das erste motorische Stellelement zwischen dem Förderrohr der Förderschnecke und dem ersten Auslaufrüsselteil und das weitere motorische Stellelement zwischen dem ersten und dem weiteren Auslaufrüsselteil angeordnet ist.

Um auf einfache Weise das Mitnahmevolumen an Material für die Sämaschine großer Arbeitsweise zu erhöhen, dass zwei unmittelbar hintereinander angeordnete Vorratsbehältereinheiten vorgesehen sind.

Infolge dieser Maßnahmen lässt sich das Gesamtaufnahmevermögen der der Sämaschine großer Arbeitsweise zugeordneten Vorratsbehältereinheit in einfacher Weise verdoppeln.

In bevorzugter Weise lässt sich die Verdoppelung des Gesamtaufnahmevermögens dadurch erreichen, dass die beiden Vorratsbehältereinheiten gleichartig und/oder spiegelbildlich ausgebildet sind.

Eine einfache Zuordnung der beiden unmittelbar hintereinander angeordneten Vorratsbehältereinheiten lässt sich dadurch erreichen, dass die gleichartig ausgestalteten Vorratsbehältereinheiten in der Draufsicht gesehen punktsymmetrisch zueinander angeordnet sind.

Um eine möglichst dichte Zuordnung der Vorratsbehältereinheiten ohne eine Beschädigung Gefahr ein verwinden des Rahmens, auf dem die Vorratsbehältereinheiten angeordnet sind zu erreichen, ist vorgesehen, dass die Vorratsbehältereinheiten in dem am dichtesten einander benachbarten Bereichen mit einem Abstand kleiner als 10 cm, vorzugsweise etwa 5 cm zueinander angeordnet sind.

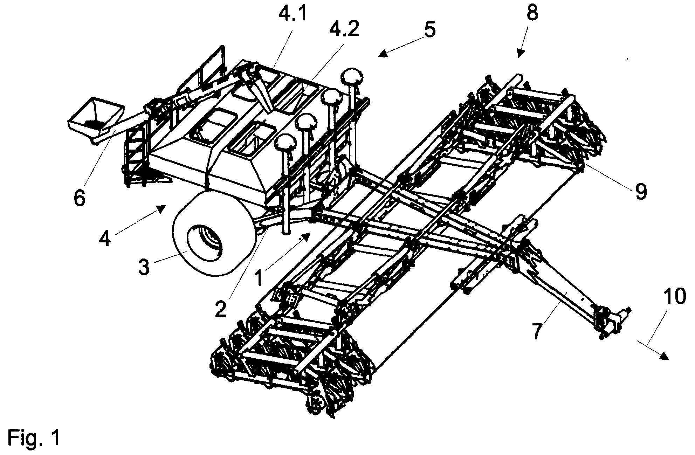

Weitere Einzelheiten der Erfindung sind der Beispielsbeschreibung und den Zeichnungen zu entnehmen. Hierbei zeigen
- Fig. 1: die Sämaschine in Arbeitsstellung, in Prinzipdarstellung und in perspektivischer Darstellungsweise,

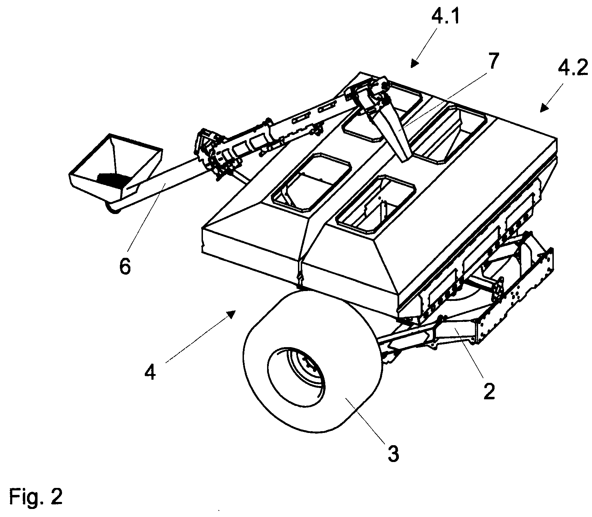

- Fig. 2: die beiden an dem hinteren Zentralrahmenbereich erfindungsgemäß hintereinander angeordneten Vorratsbehältereinheiten mit zugeordneter Förderschnecke im vergrößerten Maßstabe und in perspektivischer Darstellungsweise,
- Fig. 3: die beiden an dem hinteren Zentralrahmenbereich erfindungsgemäß hintereinander angeordneten Vorratsbehältereinheiten mit zugeordneter Förderschnecke in Seitenansicht,
- Fig. 4: die beiden an dem hinteren Zentralrahmenbereich erfindungsgemäß hintereinander angeordneten Vorratsbehältereinheiten mit zugeordneter Förderschnecke in Draufsicht,
- Fig. 5: die beiden an dem hinteren Zentralrahmenbereich erfindungsgemäß hintereinander angeordneten Vorratsbehältereinheiten mit zugeordneter Förderschnecke in Seitenansicht und mit anderer Einstellung des Auslaufrüssels und
- Fig. 6: die beiden an dem hinteren Zentralrahmenbereich erfindungsgemäß hintereinander angeordneten Vorratsbehältereinheiten mit zugeordneter Förderschnecke in Draufsicht mit der Einstellung des Auslaufrüssels gemäß Fig. 5.

Die Sämaschine großer Arbeitsbreiten weist den Zentralrahmen 1 auf. Auf der Rückseite des Zentralrahmens 1 sind über einen Abstützrahmen 2 die hinteren Laufräder 3 angeordnet. Auf dem hinteren Abstützrahmen 2 sind dem aus den beiden Vorratsbehältereinheiten 4.1 und 4.2 bestehende Gesamtvorratsbehälter 4 mit mehreren Vorratsbehälterbereichen 4.1.1, 4.1.2, 4.2.1 und 4.2.2 zur Aufnahme von Saatgut und Düngemittel und die vier Verteilereinheiten 5 angeordnet. Des Weiteren ist auf der Rückseite der Vorratsbehältereinheit eine als Förderschnecke 6 ausgebildete Befüllschnecke angeordnet.

An der Vorderseite des Zentralrahmens 1 ist eine Zugdeichsel 7 zur Ankupplung an einen Ackerschlepper angeordnet. Die Sämaschine großer Arbeitsbreite, die hier 12m beträgt, stützt sich somit über die hinteren Laufräder 2 auf den Boden und auf der an einer Zugvorrichtung eines Ackerschleppers angekuppelten Zugdeichsel 7 ab.

An dem Zentralrahmen 1 ist vor den Laufrädern 3 und der Gesamtvorratsbehälter 4 und den Verteilereinheiten 5 ein Scharrahmen 8, an dem die Säschare 9 in mehreren Querreihen hintereinander und auf Lücke zueinander in bekannter und daher nicht näher dargestellter Weise angeordnet sind. Der Einfachheit halber sind nur die Säschare 9 dargestellt, welche jeweils in den äußersten Bereichen angeordnet sind. Der Scharrahmen 8 besteht aus einem an dem Zentralrahmen 1 angeordneten Mittelrahmen mit beidseitig mittels Gelenkverbindungen, deren Gelenkachsen in Fahrtrichtung 10 verlaufen angeordnet, die aus einem inneren und einem äußeren Seitenteilrahmen bestehenden schwenkbar angeordneten Seitenrahmen angeordnet. Die inneren und äußeren Seitenteilrahmen sind mittels Gelenken, deren Schwenkachse in Fahrtrichtung 10 verlaufen zueinander schwenkbar angeordnet.

Die beiden Vorratsbehältereinheiten 4.1 und 4.2 sind in dem am dichtesten einander benachbarten Bereichen mit einem Abstand A kleiner als 10 cm, vorzugsweise etwa 5 cm unmittelbar hintereinander angeordnet. Die beiden Vorratsbehältereinheiten 4.1 und 4.2 sind gleichartig und bezogen auf ihre Anordnung zueinander spiegelbildlich zueinander ausgebildet. Hierbei sind die gleichartig ausgestalteten Vorratsbehältereinheiten 4.1 und 4.2 in der Draufsicht gesehen punktsymmetrisch zueinander angeordnet.

Durch diese Anordnung sind die Vorratsbehältereinheiten 4.1 und 4.2 in kompakter Weise der Sämaschine zugeordnet.

Den einzelnen Vorratsbehälterbereiche 4.1.1, 4.1.2, 4.2.1 und 4.2.2 sind jeweils Befüllöffnungen 4.1.1.1, 4.1.2.1, 4.2.1.1 und 4.2.2.1 zugeordnet, über welche das jeweils auszubringende Material in die einzelnen Vorratsbehälterbereiche einzufüllen ist. Die Befüllöffnungen 4.1.1.1, 4.1.2.1, 4.2.1.1 und 4.2.2.1 sind jeweils in und quer zur Fahrtrichtung beabstandet zueinander angeordnet.

Zum Befüllen der Einzelvorratsbehälterbereiche 4.1.1, 4.1.2, 4.2.1 und 4.2.2 über die Befüllöffnungen 4.1.1.1, 4.1.2.1, 4.2.1.1 und 4.2.2.1 ist dem Gesamtvorratsbehälter 4 die Förderschnecke 6 zugeordnet. Diese Förderschnecke 6 weist einen Auslaufrüssel 7 auf. Dieser Auslaufrüssel ist verschwenkbar angeordnet ist in den Befüllöffnungen 4.1.1.1, 4.1.2.1, 4.2.1.1 und 4.2.2.1 zum Befüllen in der Vorratsbehälterbereiche 4.1.1, 4.1.2, 4.2.1 und 4.2.2 zugeordnet.

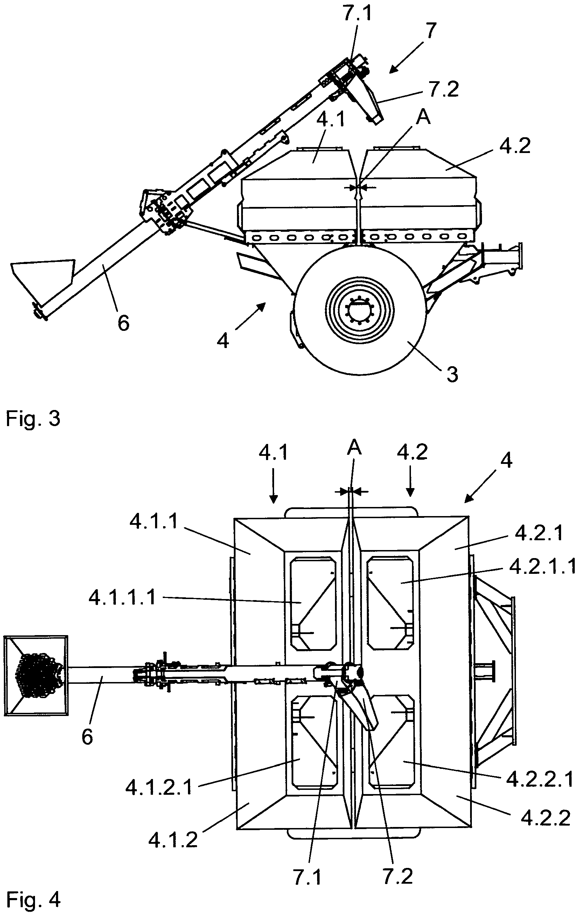

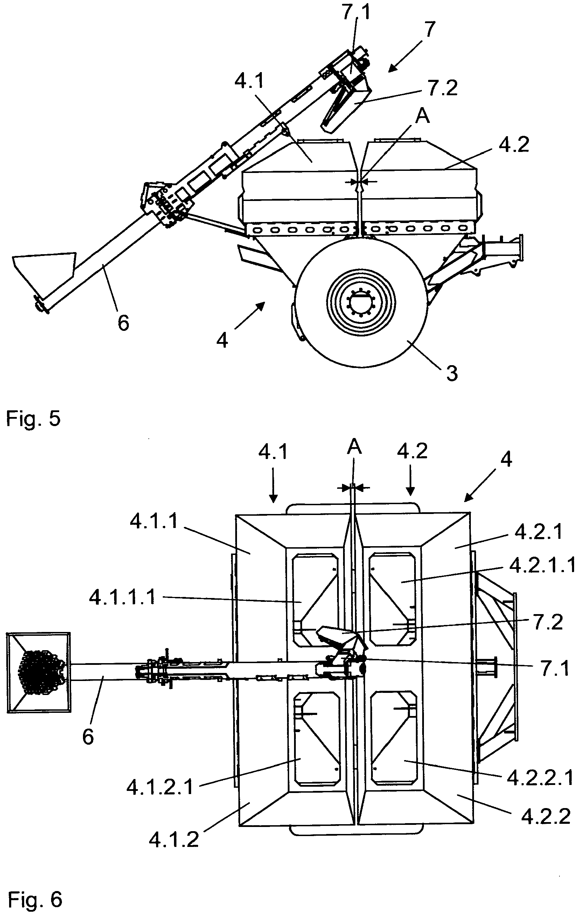

Der Auslaufrüssel 7 ist einerseits zwischen zwei Endpositionen innen und entgegen der Fahrtrichtung 10 und andererseits zwischen zwei Endpositionen quer zur Fahrtrichtung 10 verschwenkbar angeordnet, wobei einige dieser Endpositionen in den Fig. 3 bis 6 dargestellt sind.

Der Auslaufrüssel 7 weist ein erstes Auslaufrüsselteil 7.1 und daran ein schwenkbar befestigtes weiteres Auslaufrüsselteil 7.2 auf. Das erste Auslaufrüsselteil 7.1 ist um die Längsachse der Förderschnecke 6 verschwenkbar angeordnet. Das zweite Auslaufrüsselteil 7.2 ist an dem ersten Auslaufrüsselteil 7.1 um eine quer zur Längsachse der Förderschnecke 6 verlaufende Schwenkachse verschwenkbar angeordnet. Weiterhin ist zwischen dem Förderrohr der Förderschnecke 6 ein erstes motorisches Stellelement zum Verschwenken des ersten Auslaufrüsselteiles 7.1 um die Längsachse der Förderschnecke 6 angeordnet. Somit ist das Auslaufrüsselteil 7 quer zur Fahrtrichtung 10 verschwenkbar. Außerdem ist ein weiteres motorisches Stellelement zwischen dem ersten und dem weiteren Auslaufrüsselteil 7.1 angeordnet. Mittels dieses motorischen Stellelementes ist das weitere Auslaufrüsselteil 7.2 in und entgegen der Fahrtrichtung 10 verschwenkbar.

## Patentansprüche

1. Sämaschine großer Arbeitsbreite mit einem sich nur über im hinteren Bereich der Sämaschine angeordnete Laufräder (3) auf dem Boden und sich an einer Zugvorrichtung eines Ackerschleppers angekuppelten Zugdeichsel (7) abstützenden Zentralrahmen (1), wobei hinter dem Scharrahmen (8) und oberhalb der Laufräder (3) zumindest eine, vorzugsweise nicht mittelpunktsymmetrische, Vorratsbehältereinheit (4.1,4.2) mit zumindest zwei voneinander getrennten Vorratsbehälterbereichen (4.1.1, 4.1.2, 4.2.1, 4.2.2) an dem Zentralrahmen angeordnet ist, wobei jedem Vorratsbehälterbereich ein Dosierorgan (5), welches das jeweilige auszubringende Material über Schleusen in zu den Säscharen (9) führenden und mit jeweils einem Förderluftstrom beaufschlagte Förderleitungen in einstellbaren Mengen einspeist, wobei den, mehrere jeweils in und quer zur Fahrtrichtung (10) beabstandet zueinander angeordnete Einfüllöffnungen (4.1.1.1, 4.1.2.1, 4.2.1.1, 4.2.2.1) aufweisenden, Vorratsbehältereinheiten (4.1, 4.2) eine als Förderschnecke (6) ausgebildete Befülleinrichtung mit einem verschwenkbaren Auslaufrüssel (7) zugeordnet ist, und der Auslaufrüssel (7) einerseits zwischen zwei Endpositionen in und entgegen der Fahrtrichtung (10) und andererseits zwischen zwei Endpositionen quer zur Fahrtrichtung (10) verschwenkbar angeordnet ist.

2. Sämaschine nach Anspruch 1, **dadurch gekennzeichnet, dass** dem Auslaufrüssel (7) ein erstes motorisches Stellelement für die Verschwenkung des Auslaufrüssels (7, 7.1) quer zur Fahrtrichtung (10) und ein weiteres motorisches Stellelement für die Verschwenkung des Auslaufrüssels (7, 7.2) in und entgegen der Fahrtrichtung (10) zugeordnet ist.

3. Sämaschine nach Anspruch 1, **dadurch gekennzeichnet, dass** der Auslaufrüssel (7) ein erstes Auslaufrüsselteil (7.1) und ein daran schwenkbar befestigtes weiteres Auslaufrüsselteil (7.2) aufweist, dass das erste Auslaufrüsselteil (7.1) um die Längsachse der Förderschnecke (6) verschwenkbar angeordnet ist, dass das zweite Auslaufrüsselteil (7.2) an dem ersten Auslaufrüsselteil (7.1) um eine quer zur Längsachse der Förderschnecke (6) verlaufende Schwenkachse verschwenkbar angeordnet ist.

4. Sämaschine nach Anspruch 3, **dadurch gekennzeichnet, dass** das erste motorische Stellelement zwischen dem Förderrohr der Förderschnecke (6) und dem ersten Auslaufrüsselteil (7.1) und das weitere motorische Stellelement zwischen dem ersten (7.1) und dem weiteren Auslaufrüsselteil (7.2) angeordnet ist.

5. Sämaschine nach Anspruch 1, **dadurch gekennzeichnet, dass** zwei unmittelbar hintereinander angeordnete Vorratsbehältereinheiten (4.1, 4.1) vorgesehen sind.

6. Sämaschine nach Anspruch 5, **dadurch gekennzeichnet, dass** die beiden Vorratsbehältereinheiten (4.1, 4.1) gleichartig und/oder spiegelbildlich ausgebildet sind.

7. Sämaschine nach Anspruch 6, **dadurch gekennzeichnet, dass** die gleichartig ausgestalteten Vorratsbehältereinheiten (4.1, 4.1) in der Draufsicht gesehen punktsymmetrisch zueinander angeordnet sind.

8. Sämaschine nach Anspruch 5, **dadurch gekennzeichnet, dass** die Vorratsbehältereinheiten (4.1, 4.1) in dem am dichtesten einander benachbarten Bereichen mit einem Abstand kleiner als 10 cm, vorzugsweise etwa 5 cm zueinander angeordnet sind.

## Claims

1. Seeder of large working width with a central frame (1) which is supported on the ground only via running wheels (3) arranged in the rear region of the seeder and on a towbar (7) coupled to a towing device of a tractor, wherein at least one storage container unit (4.1, 4.2) which is preferably not symmetrical with respect to the centre point and has at least two storage container regions (4.1.1, 4.1.2, 4.2.1, 4.2.2) which are separate from each other is arranged on the central frame behind the coulter frame (8) and above the running wheels (3), wherein each storage container region is assigned a metering member (5) which feeds the respective material to be discharged via locks in adjustable quantities into delivery lines which lead to the seed coulters (9) and are subjected to a respective delivery air flow, wherein the storage container units (4.1, 4.2) having a plurality of filling openings (4.1.1.1, 4.1.2.1, 4.2.1.1, 4.2.2.1) arranged at a distance from each other in and transversely with respect to the direction of travel (10) are assigned a filling device which is designed as a delivery worm (6) and has a pivotable discharge nozzle (7), and the discharge nozzle (7) is arranged pivotably firstly between two end positions in and counter to the direction of travel (10) and secondly between two end positions transversely with respect to the direction of travel (10).

2. Seeder according to Claim 1, **characterized in that** the discharge nozzle (7) is assigned a first motorized adjustment element for pivoting the discharge nozzle (7, 7.1) transversely with respect to the direction of travel (10) and a further motorized adjustment element for pivoting the discharge nozzle (7, 7.2) in and counter to the direction of travel (10).

3. Seeder according to Claim 1, **characterized in that** the discharge nozzle (7) has a first discharge nozzle part (7.1) and a further discharge nozzle part (7.2) fastened pivotably to the latter, **in that** the first discharge nozzle part (7.1) is arranged pivotably about the longitudinal axis of the delivery worm (6), **in that** the second discharge nozzle part (7.2) is arranged on the first discharge nozzle part (7.1) so as to be pivotable about a pivot axis running transversely with respect to the longitudinal axis of the delivery worm (6).

4. Seeder according to Claim 3, **characterized in that** the first motorized adjustment element is arranged between the delivery tube of the delivery worm (6) and the first discharge nozzle part (7.1), and the further motorized adjustment element is arranged between the first discharge nozzle part (7.1) and the further discharge nozzle part (7.2).

5. Seeder according to Claim 1, **characterized in that** two storage container units (4.1, 4.1) arranged directly one behind the other are provided.

6. Seeder according to Claim 5, **characterized in that** the two storage container units (4.1, 4.1) are formed identically and/or in a mirror-inverted manner.

7. Seeder according to Claim 6, **characterized in that** the storage container units (4.1, 4.1) of identical design are arranged point-symmetrically with respect to each other, as seen in top view.

8. Seeder according to Claim 5, **characterized in that** the storage container units (4.1, 4.1) are arranged in the regions closest adjacent to each other with a distance smaller than 10 cm, preferably approximately 5 cm from each other.

## Revendications

1. Semoir présentant une grande largeur de travail avec un châssis central (1) ne reposant sur le sol que par des roues (3) disposées dans la région arrière du semoir et sur un timon de traction (7) couplé à un dispositif de traction d'un tracteur agricole, dans lequel au moins une unité de réservoir de stockage (4.1, 4.2), de préférence non symétrique par rapport au centre, avec au moins deux zones de réservoirs de stockage (4.1.1, 4.1.2, 4.2.1, 4.2.2) séparées l'une de l'autre, est disposée sur le châssis central (1), derrière le châssis porte-socs (8) et au-dessus des roues (3), dans lequel à chaque zone de réservoir de stockage est associé un organe de dosage (5), qui fournit en quantités réglables la matière respective à apporter via des sas dans des conduites de transport menant aux socs distributeurs (9) et parcourues chacune par un courant d'air de transport, dans lequel un dispositif de remplissage en forme de vis transporteuse (6), avec un museau de sortie (7), est associé aux unités de réservoirs de stockage (4.1, 4.2) présentant plusieurs ouvertures de remplissage (4.1.1.1, 4.1.2.1, 4.2.1.1, 4.2.2.1) disposées à distance les unes des autres dans la direction de marche et transversalement à celle-ci, et le museau de sortie (7) est agencé de façon pivotante d'une part entre deux positions terminales dans et à l'opposé de la direction de marche (10) et d'autre part entre deux positions terminales transversalement à la direction de marche (10).

2. Semoir selon la revendication 1, **caractérisé en ce qu'**un premier élément de réglage motorisé est associé au museau de sortie (7) pour le pivotement du museau de sortie (7, 7.1) transversalement à la direction de marche (10) et un autre élément de réglage motorisé est associé au museau de sortie (7) pour le pivotement du museau de sortie (7, 7.2) dans et à l'opposé de la direction de marche (10).

3. Semoir selon la revendication 1, **caractérisé en ce que** le museau de sortie (7) présente une première partie de museau de sortie (7.1) et une autre partie de museau de sortie (7.2) fixée de façon pivotante à celle-ci, **en ce que** la première partie de museau de sortie (7.1) est disposée de façon pivotante autour de l'axe longitudinal de la vis transporteuse (6), **en ce que** la deuxième partie de museau de sortie (7.2) est disposée de façon pivotante sur la première partie de museau de sortie (7.1), autour d'un axe de pivotement s'étendant transversalement à l'axe longitudinal de la vis transporteuse (6).

4. Semoir selon la revendication 3, **caractérisé en ce que** le premier élément de réglage motorisé est disposé entre le tube transporteur de la vis transporteuse (6) et la première partie de museau de sortie (7.1) et l'autre élément de réglage motorisé est disposé entre la première (7.1) et l'autre (7.2) parties de museau de sortie.

5. Semoir selon la revendication 1, **caractérisé en ce qu'**il est prévu deux unités de réservoirs de stockage (4.1, 4.1) disposées directement l'une derrière l'autre.

6. Semoir selon la revendication 5, **caractérisé en ce que** les deux unités de réservoirs de stockage (4.1, 4.1) présentent une configuration identique et/ou symétrique.

7. Semoir selon la revendication 6, **caractérisé en ce que** les unités de réservoirs de stockage (4.1, 4.1) de configuration identique sont disposées, dans une vue en plan, avec la symétrie ponctuelle l'une par rapport à l'autre.

8. Semoir selon la revendication 5, **caractérisé en ce que** les unités de réservoirs de stockage (4.1, 4.1) sont disposées, dans les régions les plus proches l'une de l'autre, avec une distance inférieure à 10 cm, de préférence d'environ 5 cm l'une de l'autre.
